(19) Europäisches Patentamt
European Patent Office
Office européen des brevets

(11) **EP 2 481 515 B1**

(12) **EUROPEAN PATENT SPECIFICATION**

(45) Date of publication and mention
of the grant of the patent:
**29.04.2015 Bulletin 2015/18**

(51) Int Cl.:
**B23K 9/18** *(2006.01)*       **B23K 35/30** *(2006.01)*
**B23K 35/36** *(2006.01)*       **C22C 38/04** *(2006.01)*
**B23K 35/362** *(2006.01)*

(21) Application number: **12152998.6**

(22) Date of filing: **30.01.2012**

(54) **Bonded flux and solid wire for submerged arc welding, and method for submerged arc welding of steel for low temperature service**

Gesintertes Schweißpulver und Massivdraht für Unterpulverschweißen sowie Verfahren zum Unterpulverschweißen von Stahl für Niedertemperaturbetrieb

Fondant lié et fil solide pour le soudage à l'arc submergé et procédé de soudage à l'arc submergé d'acier pour service à basse température

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2011 JP 2011019280**

(43) Date of publication of application:
**01.08.2012 Bulletin 2012/31**

(73) Proprietor: **Kabushiki Kaisha Kobe Seiko Sho (Kobe Steel, Ltd.)**
**Kobe-shi, Hyogo 651-8585 (JP)**

(72) Inventors:
• **Kan, Hou**
**Kanagawa, 251-0014 (JP)**
• **Ota, Makoto**
**Kanagawa, 251-0014 (JP)**
• **Nakanishi, Kohjiroh**
**Kanagawa, 251-0014 (JP)**

(74) Representative: **Busher, Samantha Jane et al**
**Elkington and Fife LLP**
**3-4 Holborn Circus**
**London, EC1N 2HA (GB)**

(56) References cited:
**EP-A1- 2 153 932      JP-A- 7 256 489**
**JP-A- 10 113 791      JP-A- 2000 317 634**

**Description**

BACKGROUND OF INVENTION

The present invention relates to a bonded flux and a wire for submerged arc welding. Specifically, the present invention relates to a bonded flux and a solid wire for submerged arc welding, and method for submerged arc welding of a steel for low temperature service, each of which can give a weld bead having satisfactory fracture toughness at low temperatures down to about -40°C and is suitable for welding of a low-temperature high-strength steel used typically in offshore structures and liquefied petroleum gas (LPG) tanks.

Steels for low temperature service are used typically in line pipes in cold climate areas; offshore structures, such as oil-well drilling platforms in ocean; and LPG tanks. These structures require further higher quality from the viewpoints of safety and durability and require, above all, further tightened improvements in performance in weld beads.

Low-temperature fracture toughness performance is one of the required quality of weld beads. The toughness is evaluated, for example, on the basis of absorbed energy in a Charpy impact test and on the basis of fracture toughness (in terms of crack tip opening displacement; CTOD) at a design temperature.

The assignee of the present invention has proposed a technique for improving the low-temperature fracture toughness performance as disclosed in Japanese Unexamined Patent Application Publication (JP-A) No. H07-256489. A bonded flux for submerged arc welding disclosed in this patent literature includes MgO in a content of from 20% to 45%, $Al_2O_3$ in a content of from 10% to 30%, $CaF_2$ in a content of from 5°/ to 15%, $SiO_2$ in a content of from 5% to 20%, a metal carbonate (as $CO_2$ equivalent) in a content of from 2% to 10%, one or both of CaO and BaO in a total content of from 2% to 20%, one or more of metallic silicon, metallic aluminum, and metallic titanium in a total content of from 0.5% to 5%, metallic titanium and titanium oxide (as titanium equivalent) (total titanium) in a total content of from 1% to 7%, one or both of metallic boron (B) and boron oxide (as boron equivalent) in a total content of from 0.1% to 0.5%, and sulfur (S) in a content of from 0.005% to 0.15%.

Independently, Japanese Unexamined Patent Application Publication (JP-A) No. H10-113791 discloses a bonded flux and a wire for submerged arc welding of a steel for low temperature service, in order to give a weld bead having good weldability and satisfactory toughness both as welded (AW) and after stress relief heat treatment (post-weld heat treatment; PWHT) in multilayer welding of controlled deoxidization typified by a titanium-killed steel for use as a steel for low temperature service. The bonded flux and wire are a bonded flux and a wire for submerged arc welding of a controlled deoxidized steel sheet, typified by a titanium-killed steel, containing at least one element selected from the group consisting of Ca, Mg, Zr, and Al in a total content of 0.015 percent by weight or less. The bonded flux for submerged arc welding satisfies the following Expressions (1), (2), and (3) and satisfies the following conditions: $8 \leq (SiO_2)_F \leq 16\%$, $(Si)_F \leq 0.5\%$, $0.1 \leq (Al)_F \leq 1.5\%$, $(Mg)_F \leq 4.5\%$, and $0.1 \leq (Al)_F + 0.25(Mg)_F \leq 1.5\%$; and the wire for submerged arc welding also satisfies the following Expressions (1), (2), and (3) and satisfies following conditions: $0.005\% \leq [C]_W \leq .08\%$, $0.005\% \leq [Si]_W \leq 0.10\%$, and $1.5\% \leq [Ni]_W \leq 3.5\%$:

$$0.002 \leq [0.1(B_2O_3)_F + 6[B]_W + 3[B]_B] \leq 0.025 \qquad (1)$$

$$0.05 \leq [0.01(TiO_2)_F + 0.1(Ti)_F + 3[Ti]_W + 1.5[Ti]_B] \leq 0.22 \qquad (2)$$

$$[0.1(P)_F + 0.6[P]_W + 0.3[P]_B] \leq 0.012 \qquad (3)$$

SUMMARY OF INVENTION

The technique disclosed in JP-A No. H07-256489 optimizes oxygen, titanium, and boron contents in the weld bead and ensures satisfactory fracture toughness at temperatures down to -60°C by regulating the basicity and the alloy composition, such as Ti and B, of the flux. However, the resulting weld bead has a strength in terms of 0.2% yield strength of about 450 MPa and is demanded to have a further higher strength.

The technique disclosed in JP-A No. H10-113791 is intended to give a weld metal with excellent toughness at low temperatures down to -70°C both as welded (AW) and after stress relief heat treatment (PWHT) in welding of a steel for low temperature service to be used typically in offshore structures and LPG tanks. This technique, however, fails to attain improvements in low-temperature fracture toughness (particularly CTOD performance).

The present invention has been made in consideration of these problems, and an object of the present invention is to provide a bonded flux and a solid wire each for submerged arc welding, and a method for submerged arc welding of a steel for low temperature service, each of which gives a weld bead (weld metal) having satisfactory low-temperature fracture toughness with excellent weldability, by suitably specifying the chemical composition of the wire and the flux.

Solution to Problem

The present invention provides, in an aspect, a bonded flux for submerged arc welding. The bonded flux includes MgO in a content of from 23 to 43 percent by mass, $Al_2O_3$ in a content of from 11 to 31 percent by mass, $CaF_2$ in a content of from 6 to 16 percent by mass, $SiO_2$ in a content of from 7 to 20 percent by mass, at least one metal carbonate in a content as $CO_2$ equivalent of from 1.0 to 8.0 percent by mass, at least one of CaO and BaO in a total content of from 2 to 16 percent by mass, metallic silicon (Si) in a content of from 0.4 to 1.5 percent by mass, metallic titanium (Ti) and a titanium oxide in a total content as titanium equivalent [Total Ti] of from 1.0 to 7.0 percent by mass, at least one of metallic boron (B) and boron oxide in a total content as boron equivalent [Total B] of from 0.01 to 0.20 percent by mass, and at least one oxide of alkali metals sodium (Na), potassium (K), and lithium (Li) in a total content as equivalents of respective elements of from 1.0 to 6.0 percent by mass. The bonded flux has a ratio ([Total Ti]+[Total B])/[$SiO_2$] of from 0.05 to 0.55 where [Total Ti] represents the total titanium content as titanium equivalent; [Total B] represents the total boron content as boron equivalent; and [$SiO_2$] represents the $SiO_2$ content.

In another aspect, the present invention provides a solid wire for submerged arc welding. The solid wire includes carbon (C) in a content of from 0.10 to 0.15 percent by mass, manganese (Mn) in a content of from 1.5 to 2.5 percent by mass, nickel (Ni) in a content of from 2.0 to 2.6 percent by mass, molybdenum (Mo), if any, in a content of 0.05 percent by mass or less, and nitrogen (N), if any, in a content of 0.008 percent by mass or less, with the remainder being iron (Fe) and inevitable impurities. The solid wire has a ratio [Ni]/([Mn]+[Mo]) of from 0.9 to 1.5 where [Ni] represents the nickel content; [Mn] represents the manganese content; and [Mo] represents the molybdenum content.

The present invention further provides, in yet another aspect, a method for submerged arc welding of a steel for low temperature service. The method includes the steps of:

preparing a bonded flux for submerged arc welding including MgO in a content of from 23 to 43 percent by mass, $Al_2O_3$ in a content of from 11 to 31 percent by mass, $CaF_2$ in a content of from 6 to 16 percent by mass, $SiO_2$ in a content of from 7 to 20 percent by mass, at least one metal carbonate in a content as $CO_2$ equivalent of from 1.0 to 8.0 percent by mass, at least one of CaO and BaO in a total content of from 2 to 16 percent by mass, metallic silicon (Si) in a content of from 0.4 to 1.5 percent by mass, metallic titanium (Ti) and a titanium oxide in a total content as titanium equivalent [Total Ti] of from 1.0 to 7.0 percent by mass, at least one of metallic boron (B) and boron oxide in a total content as boron equivalent [Total B] of from 0.01 to 0.20 percent by mass, and at least one oxide of alkali metals sodium (Na), potassium (K), and lithium (Li) in a total content as equivalents of respective elements of from 1.0 to 6.0 percent by mass, and the bonded flux having a ratio ([Total Ti]+[Total B])/[$SiO_2$] of from 0.05 to 0.55 where [Total Ti] represents the total titanium content as titanium equivalent; [Total B] represents the total boron content as boron equivalent; and [$SiO_2$] represents the $SiO_2$ content;

preparing a solid wire for submerged arc welding including carbon (C) in a content of from 0.10 to 0.15 percent by mass, manganese (Mn) in a content of from 1.5 to 2.5 percent by mass, nickel (Ni) in a content of from 2.0 to 2.6 percent by mass, molybdenum (Mo), if any, in a content of 0.05 percent by mass or less, and nitrogen (N), if any, in a content of 0.008 percent by mass or less, with the remainder being iron (Fe) and inevitable impurities; and the solid wire having a ratio [Ni]/([Mn]+[Mo]) of from 0.9 to 1.5 where [Ni] represents the nickel content; [Mn] represents the manganese content; and [Mo] represents the molybdenum content; and

performing submerged arc welding of a steel for low temperature service using the bonded flux and the solid wire to give a weld metal comprising boron (B) in a content of from 0.0010 to 0.0050 percent by mass and titanium (Ti) in a content of from 0.010 to 0.050 percent by mass and having a ratio [Ti]/[O] of from 0.050 to 0.90 where [Ti] represents the titanium content; and [O] represents an oxygen content.

Advantageous Effects of the Invention

The bonded flux for submerged arc welding according to the present invention, as specifying the chemical composition thereof suitably, can give a weld metal having satisfactory weldability and excellent fracture toughness.

The solid wire for submerged are welding according to the present invention, as specifying the chemical composition thereof suitably, can give a weld metal having a high strength and satisfactory fracture toughness.

In addition, the method for submerged arc welding of a steel for low temperature service can give a weld metal having a 0.2% yield strength of 500 MPa or more, a tensile strength of 610 MPa or more, and a CTOD $\delta$ (-40°C) of 0.25 mm or more.

BRIEF DESCRIPTION OF DRAWINGS

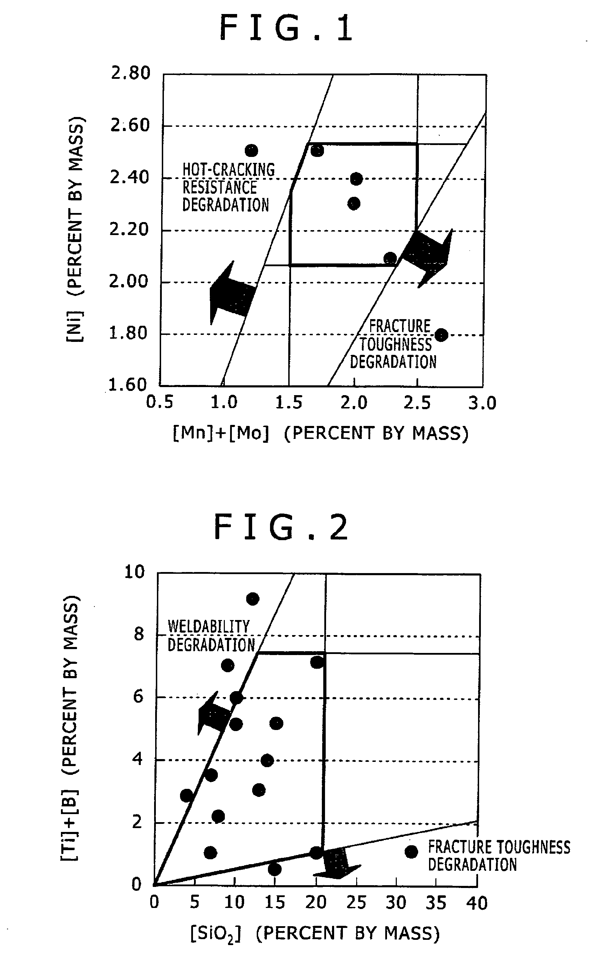

FIG. 1 is a graph chart illustrating how the ratio [Ni]/([Mn]+[Mo]) of a wire affects properties of a weld metal; and FIG. 2 is a graph chart illustrating how the ratio ([Total Ti]+[Total B])/[$SiO_2$] of a flux affects the properties of a weld metal.

DESCRIPTION OF EMBODIMENTS

While there have been proposed a number of techniques for giving weld metals with higher toughness, the technique disclosed in JP-A No. H07-256489 attains high toughness of the weld metal by regulating the basicity and alloy composition of the flux. Independently, the technique disclosed in JP-A No. H10-113791 attains high toughness of the weld metal by regulating alloy compositions both in the flux and in the wire. However, these conventional techniques give weld metals having a 0.2°/o yield strength of at most about 450 MPa and a low CTOD. The present invention has been made to solve such problems of the conventional techniques and has developed a weld metal having a strength in terms of 0.2% yield strength of 500 MPa or more, a tensile strength of 610 MPa or more, and a CTOD of 0.25 mm or more down to -40°C, by regulating the alloy compositions of the flux and the wire.

Reasons of specifying the chemical compositions of the flux and wire according to the present invention will be described below. Initially, the chemical composition of the bonded flux for submerged arc welding will be described.

(1) Bonded Flux for Submerged Arc Welding

MgO Content: 23 to 43 percent by mass

Magnesium oxide (MgO), when added, increases the basicity and serves as a deoxidizer to decrease oxygen in the weld metal, thus having an oxygen decreasing effect. In addition, MgO, when added, increases the fire resistance of slag. MgO, if in a content of less than 23 percent by mass, may not exhibit these effects sufficiently In contrast, MgO, if in a content of more than 43 percent by mass, may impair slag removability and bead appearance.

$Al_2O_3$ Content: 11 to 31 percent by mass

Aluminum oxide ($Al_2O_3$) functions as a slag-forming material and has the effect of ensuring slag removability of the bead In addition, $Al_2O_3$ has the effect of increasing the are concentricity and arc stability. However, if $Al_2O_3$ content is less than 11 percent by mass, the slag removability may be insufficient, and welding may be impeded because of unstable are. In contrast, $Al_2O_3$, if in a content of more than 31 percent by mass, may cause the weld metal to have a higher oxygen content and to thereby have insufficient toughness.

$CaF_2$ Content: 6 to 16 percent by mass

Calcium fluoride ($CaF_2$) is known to have the effect of regulating the melting point of generated slag, and also has the effect of decreasing oxygen in the weld metal. However, $CaF_2$, if in a content of less than 6 percent by mass, may not exhibit these effects sufficiently. In contrast, $CaF_2$, if in a content of more than 16 percent by mass, may cause unstable arc and poor bead appearance, and may cause the generation of pockmarks.

$SiO_2$ Content: 7 to 20 percent by mass

Silicon dioxide ($SiO_2$) serves as a slag-forming material and has the effect of allowing the bead to have a good appearance and a good shape. $SiO_2$, if in a content of less than 7 percent by mass, may not exhibit the effects sufficiently. In contrast, $SiO_2$, if in a content of more than 20 percent by mass, may increase oxygen in the weld metal to thereby impair the toughness of the weld metal

Metal Carbonate Content: 1.0 to 8.0 percent by mass as $CO_2$ equivalent

The metal carbonate has an arc shielding effect in which the metal carbonate gasifies by the action of welding heat to reduce a water vapor partial pressure in the arc atmosphere and to reduce a diffusible hydrogen content in the weld metal, thus having an are shielding effect. However, the metal carbonate, if in a content of less than 1.0 percent by mass, may not exhibit these effects sufficiently. In contrast, the metal carbonate, if in a content of more than 8.0 percent by mass, may impair the slag removability and may cause pockmarks on the bead in some cases, thus causing poor workability. In general, exemplary metal carbonates include $CaCO_3$ and $BaCO_3$.

Total Content of At Least One of CaO and BaO: 2 to 16 percent by mass

Calcium oxide (CaO) and barium oxide (BaO) serve to increase the basicity and effectively decrease oxygen in the weld metal, as with MgO. CaO and BaO have identical operation and effects. However, CaO and/or BaO, if in a total content of less than 2 percent by mass, may not exhibit the effects sufficiently. In contrast, CaO and/or BaO, if in a content of more than 16 percent by mass, may impair arc stability and bead appearance.

Metallic Silicon Content: 0.4 to 1.5 percent by mass

Metallic silicon (metallurgical silicon) has a deoxidizing action of reducing the oxygen content in the weld metal. The metallic silicon is generally added in the form of an Fe-Si alloy. The metallic silicon, if in a content in the alloy of less than 0.4 percent by mass based on the mass of the flux, may not exhibit the deoxidizing effect sufficiently. The metallic silicon, if in a content of more than 1.5 percent by mass, may exhibit a saturated deoxidizing effect, and, contrarily, may cause the weld metal to have insufficient toughness and to have an excessively high strength.

Total Content of Metallic Titanium and Titanium Oxide(s) (Total Ti): 1.0 to 7.0 percent by mass as titanium equivalent

Metallic titanium has a deoxidizing effect to reduce the oxygen content in the weld metal. Titanium oxide(s) serves as a slag-forming agent and has the effect of regulating the viscosity and flowability. During welding, the metallic titanium is oxidized into a titanium oxide, thereby also serves as a slag-forming agent and has the effect of regulating the viscosity and flowability. These components, if in a total content (Total Ti) of less than 1.0 percent by mass, may not exhibit the effects sufficiently. In contrast, these components, if in a total content (Total Ti) of more than 7.0 percent by mass, may cause excessive deoxidization and may cause an excessive amount of slag, thus causing seizure of the bead surface and impairing slag removability. Thus, the metallic titanium and titanium oxide are in intimate association with each other, and the content thereof is controlled as a "Total Ti" (content). The total Ti content, i.e., the total of contents of metallic titanium and titanium oxide (as titanium equivalent) in the flux is more preferably from 0.3 to 1.3 percent by mass.

Total Content of At Least One of Metallic Boron and Boron Oxide: 0.01 to 0.20 percent by mass as boron equivalent

Metallic boron and boron oxide have the effect of regulating a dissolved boron content in the weld metal. These components, if in a total content of less than 0.01 percent by mass as boron equivalent, may impede the formation of fine microstructures in grain boundary segregation of the dissolved boron and may not exhibit the effect of improving toughness sufficiently. In contrast, these components, if in a total content of more than 0.20 percent by mass as boron equivalent, may cause the weld metal to have excessively increased hardenability and to have insufficient toughness. The total content of one or both of metallic boron and boron oxide in the flux is more preferably from 0.01 to 0.15 percent by mass as boron equivalent.

Total Content of At Least One Oxide of Alkali Metals Sodium (Na), Potassium (K), And Lithium (Li): 1.0 to 6.0 percent by mass as equivalents of respective elements

Oxides of alkali metals Na, K and Li have the effect of stabilizing arc. These oxides, if in a total content of less than 1.0 percent by mass as equivalents of respective elements, may not exhibit the effect sufficiently. In contrast, these oxides, if in a total content of more than 6.0 percent by mass in terms of the respective elements, may not exhibit an improved deoxidizing effect and may cause the weld metal to have insufficient toughness and an excessively high strength.

([Total Ti]+[Total B])/[$SiO_2$]: 0.05 to 0.55

To ensure both satisfactory fracture toughness and good weldability, the chemical composition of the flux is specified as above. In addition, the present inventors have further found that both fracture toughness and weldability can be further satisfactorily ensured by specifying the chemical composition so as to have a ratio ([Total Ti]+[Total B])/[$SiO_2$] of from 0.05 to 0.55. If the ratio ([Total Ti]+[Total B])/[$SiO_2$] is less than 0.05, the weld metal may suffer from the generation of coarse microstructures having a high oxygen content to thereby have insufficient fracture toughness. In contrast, if the ratio ([Total Ti]+[Total B])/[$SiO_2$] is more than 0.55, weldability such as slag removability and bead shape may deteriorate and the weld metal may have an excessively high strength and thereby have insufficient fracture toughness. The flux more preferably has a ratio ([Total Ti]+[Total B])/[SiO$_2$] of from 0.10 to 0.40.

(2) Next, the chemical composition of the solid wire will be described

Carbon (C) Content: 0.10 to 0.15 percent by mass

Carbon (C) content should be reduced to provide satisfactory toughness and should be 0.15 percent by mass or less so as to give a weld metal having good low-temperature toughness. However, if the carbon content is less than 0.10 percent by mass, deoxidation may proceed insufficiently to cause the weld metal to have insufficient toughness.

Manganese (Mn) Content: 1.5 to 2.5 percent by mass

Manganese (Mn) is necessary for ensuring hardenability of the weld metal and for forming transformation nuclei of intragranular ferrite. Manganese may exhibit these effects sufficiently when present in a content of 1.5 percent by mass or more. However, manganese, if in a content of more than 2.5 percent by mass, may cause the weld metal to have excessively high hardenability and to have insufficient toughness.

Nickel (Ni) Content: 2.0 to 2.6 percent by mass

Nickel (Ni) dissolves in the matrix of the weld metal to allow ferrite itself to have higher toughness. Nickel may exhibit the effect sufficiently when present in a content of 2.0 percent by mass or more. However, nickel, if in a content of more than 2.6 percent by mass, may often cause phosphorus and sulfur to precipitate at grain boundaries and may often cause hot cracking.

Molybdenum (Mo) Content: 0.05 percent by mass or less

Molybdenum (Mo) has the effect of improving the hardenability of the weld metal. However, molybdenum, if in a content of more than 0.05 percent by mass, may cause the weld metal to have excessively high hardenability and to have insufficient toughness.

Nitrogen (N) Content: 0.008 percent by mass or less

Nitrogen (N) element impairs the toughness and is preferably minimized in content. The upper limit of the nitrogen content is therefore set to be 0.008 percent by mass. The remainder of the solid wire according to the present invention includes iron (Fe) and inevitable impurities.

[Ni]/([Mn]+[Mo]) Ratio: 0.9 to 1.5

To ensure both satisfactory fracture toughness and good resistance to hot cracking, the chemical composition of the solid wire according to the present invention is specified as above. In addition, the present inventors have further found that both the fracture toughness and the resistance to hot cracking can further be reliably improved by controlling the chemical composition of the solid wire so as to have a ratio [Ni]/([Mn]+[Mo]) of the nickel content to the total of the manganese content and the molybdenum content of from 0.9 to 1.5. If the ratio [Ni]/([Mn]+Mo]) is less than 0.9, the weld metal may have excessively high hardenability and thereby have insufficient fracture toughness. In contrast, if the ratio [Ni]/([Mn]+[Mo]) is more than 1.5, the weld metal may be liable to undergo hot cracking. The solid wire more preferably has a ratio [Ni]/([Mn]+]Mo]) of from 1.0 to 1.4.

(3) Next, the chemical composition of a weld metal obtained by the welding method according to the present invention will be described.

Boron (B) Content: 0.0010 to 0.0050 percent by mass

Boron (B), if in a content of less than 0.0010 percent by mass, may not exhibit the effect of suppressing pro-eutectoid ferrite sufficiently and may thereby cause the weld metal to have inferior toughness. In contrast, boron, if in a content of more than 0.0050 percent by mass, may cause the weld metal to have excessively high hardenability and to have inferior toughness.

Titanium (Ti) Content: 0.010 to 0.050 percent by mass

Titanium (Ti), if in a content of less than 0.010 percent by mass, may impede the formation of transformation nuclei of intragranular acicular ferrite to cause the weld metal to have insufficient toughness. In contrast, titanium, if in a content of more than 0.050 percent by mass, may cause the formation of coarse lath-like bainite to thereby cause the weld metal to have insufficient toughness.

[Ti]/[O] Ratio: 0.50 to 0.90

The weld metal, if having a ratio [Ti]/[O] of the titanium content to the oxygen content of less than 0.50, may have insufficient toughness due to insufficient deoxidation and subsequent formation of coarse pro-eutectoid ferrite grains. In contrast, the weld metal, if having a ratio [Ti]/[O] of more than 0.90, may have insufficient toughness due to the formation of coarse lath-like bainite.

Examples

Advantageous effects of the present invention will be illustrated in further detail with reference to several working examples below. Initially, six types of Wires W1 to W6 indicated in Table 1 below were prepared. In Table 1, Wires W1 to W3 are examples within the scope of the present invention, whereas Wires W4 to w6 are comparative examples out of the scope of the present invention. All the wires have a wire diameter of 4.0 mm. Likewise, fifteen types of Fluxes F1 to F15 indicated in Tables 2 and 3 below were prepared. These fluxes were each prepared by granulating a material powder with water glass as a binder to give granules, firing the granules at 500°C, and regulating the particle size of the fired granules to 10 to 48 mesh In Tables 2 and 3, Fluxes F1 to F5 are examples within the scope of the present invention, and Fluxes F6 to F15 are comparative examples out of the scope of the present invention.

TABLE 1

| Category | Wire No. | Chemical composition (percent by mass) | | | | | |
|---|---|---|---|---|---|---|---|
| | | C | Mn | Ni | Mb | N | Ni/(Mn+Mo) |
| Examples | W1 | 0.13 | 2.0 | 230 | trace | 0.004 | 12 |
| | W2 | 0.11 | 1.7 | 2.50 | trace | 0.005 | 1.5 |
| | W3 | 0.14 | 2.3 | 210 | trace | 0.004 | 0.9 |
| Comparative Examples | W4 | 0.12 | 2.7 | 1.80 | trace | 0.006 | 0.6 |
| | W5 | 0.10 | 12 | 250 | trace | 0.005 | 21 |
| | W6 | 0.08 | 1.9 | 2.40 | 0.10 | 0.005 | 1.3 |

TABLE 2

TABLE 2

| Category | Flux No. | MgO | $Al_2O_3$ | $CaF_2$ | $SiO_2$ | Metal carbonate | CaO+ BaO | Metallic silicon |
|---|---|---|---|---|---|---|---|---|
| Examples | F1 | 32 | 19 | 10 | 13 | 4.0 | 10 | 1.0 |
| | F2 | 23 | 31 | 6 | 14 | 1.5 | 9 | 1.5 |
| | F3 | 25 | 21 | 8 | 20 | 8.0 | 2 | 1.0 |
| | F4 | 43 | 13 | 11 | 7 | 1.0 | 16 | 1.0 |
| | F5 | 37 | 11 | 16 | 10 | 5.6 | 10 | 0.4 |

(continued)

| Category | Flux No. | MgO | Al$_2$O$_3$ | CaF$_2$ | SiO$_2$ | Metal carbonate | CaO+ BaO | Metallic silicon |
|---|---|---|---|---|---|---|---|---|
| Comparative Examples | F6 | 30 | 30 | 10 | 4 | 3.0 | 12 | 1.5 |
| | F7 | 43 | 5 | 16 | 20 | 6.0 | 7 | 1.0 |
| | F8 | 20 | 25 | 14 | 15 | 5.5 | 13 | 1.0 |
| | F9 | 33 | 25 | 4 | 12 | 12 | 10 | 0.8 |
| | F10 | 24 | 34 | 8 | 8 | 1.5 | 17 | 0.5 |
| | F11 | 23 | 12 | 7 | 32 | 8.5 | 8 | 0.5 |
| | F12 | 30 | 16 | 18 | 10 | 20 | 10 | 1.0 |
| | F13 | 48 | 12 | 7 | 7 | 0.5 | 12 | 1.0 |
| | F14 | 38 | 19 | 8 | 9 | 6.8 | 8 | 02 |
| | F15 | 32 | 14 | 13 | 15 | 6.5 | 1 | 4.0 |

TABLE 3

| Category | Flux No. | Total of metallic titanium and titaniumoxide (as titanium equivalent) | Total of metallic boron and boron oxide (as boon equivalent) | Total of oxides of akali metals Na,K and Li(as equivalents of respective elements) | ([Total Ti]+[Total B])/SIO$_2$ |
|---|---|---|---|---|---|
| Examples | F1 | 3.0 | 0.10 | 4.0 | 0.24 |
| | F2 | 4.0 | 0.03 | 6.0 | 0.29 |
| | F3 | 7.0 | 0.15 | 4.0 | 0.36 |
| | F4 | 1.0 | 0.08 | 3.0 | 0.15 |
| | F5 | 5.0 | 0.20 | 1.0 | 0.52 |
| Comparative Examples | F6 | 25 | 0.40 | 3.0 | 0.63 |
| | F7 | 1.0 | 0.10 | 7.0 | 0.05 |
| | F8 | 0.5 | 0.02 | 2.0 | 0.03 |
| | F9 | 9.0 | 0.12 | 1.0 | 0.75 |
| | F10 | 20 | 0.20 | 1.0 | 0.25 |
| | F11 | 1.0 | 0.14 | 4.0 | 0.03 |
| | F12 | 6.0 | - | 3.0 | 0.60 |
| | F13 | 3.5 | 0.05 | 5.0 | 0.50 |
| | F14 | 7.0 | 0.02 | - | 0.78 |
| | F15 | 5.0 | 0.18 | 5.5 | 0.33 |

A steel sheet indicated in Table 4 was subjected to all-weld tests using respective combinations of the solid wires in Table 1 and the fluxes in Tables 2 and 3 under welding conditions given in Table 5 below. On weld metals welded under the welding test conditions given in Table 5, mechanical properties, weldability, and chemical composition were determined according to test methods given in Table 6 below. Regarding mechanical properties, samples having a yield strength of 500 MPa or more, a tensile strength of 610 MPa or more, and a CTOD of 0.25 mm or more at -40°C were evaluated as accepted.

TABLE 4

| Base metal | Gauge (mm) | Chemical composition (percent by mass) | | | | | | | |
|---|---|---|---|---|---|---|---|---|---|
| | | C | Si | Mn | P | S | Ni | Ti | B |
| K-TEN610 | 25 | 0.12 | 025 | 125 | 0.010 | 0.002 | 0.42 | 0.002 | 0.0003 |

TABLE 5

| Base metal | K-TEN610<br>Gauge 25 mm (the chemical composition is given in Table 4) |
|---|---|
| Edge shape | 30° V groove<br>Root gap: 13mm, with backing metal |
| Wire | Wire having the chemical composition given in Table 1, wire diameter. 4.0mm |
| Flux | Flux having the chemical composition given in Tables 2 and 3 |
| welding position | Flat |
| Welding conditions | Current 550A, voltage: 30V,speed of travel: 40cm/min., welding energy input 25 kJ/mm |
| Number of built-up layers | 7 layers, 15 passes |
| Preheating and interpass temperature | 140°C to 160°C |

TABLE 6

| Tensile test | JISZ3111 No.A1 specimen,<br>Sampling position: center and middle of ness of weld metal<br>Test temperature: room temperature (20°C to 23°C) |
|---|---|
| Impact test | JISZ3111 No. 4 specimen<br>Sampling position: center and middle of thickness of weld metal<br>Test temperature: -60°C |
| Chemical composition analysis | Analysis method: JIS G1253 and JIS Z2613<br>Analysis position: center and middle of thickness of weld metal |
| CTOD test | CTOD test of weld metal according to WES (Welding Engineering Standards) 1108<br>Test temperature: -40°C |
| Diffusible hydrogen test | Test method: accoding to AWS (American Welding Society) A4.3<br>Measuring process: gas chromatography |

Next, a hot cracking test (hot-cracking resistance test) will be illustrated. A steel sheet was subjected to welding procedures using respective combinations of the solid wires in Table 1 and the fluxes in Tables 2 and 3 under welding conditions given in Table 7 below, to give weld metals. Resistance to hot cracking of the weld metals was determined by a FISCO weld cracking test. The cracking rate was defined as a percentage (%) of the crack length relative to the bead length of a ruptured weld bead. Samples having a cracking rate of 10% or less (including those with a crater crack) were accepted.

TABLE 7

| Base metal | K-TEN610 (the chemical composition is given in Table 4) |
|---|---|
| Edge shape | 90°Y groove<br>Root face: 13mm<br>Root gap: 3.0 mm |

(continued)

| Wire | Wire having the chemical composition given in Table 1, wire diameter. 4.0mm |
|---|---|
| Flux | Flux having the chemical composition given in Table 2 and 3 |
| Welding position | Flat |
| Welding conditions | Current 600A, voltage: 32V, speed of travel: 40cm/min. |
| Number of built-up layers | 1 layer, 1 pass |
| Preheating temperature | room temperature, 20°C to 23°C |
| Number of repetition | 2 |

Results of the all-weld tests and the hot cracking tests are shown in Tables 8 to 10 and FIGS. 1 and 2. Table 8 shows the mechanical properties of the examples according to the present invention and the comparative examples, and Table 9 shows the weldability and cracking rate thereof Table 10 shows the chemical compositions (with the remainder being Fe and inevitable impurities) of the weld metals obtained in the examples according to the present invention and the comparative examples. In the weldability data, "Good" represents good property, and "Poor" represents poor property.

TABLE 8

| | | Wire No. | Flux No. | Mechanical properties | | | |
|---|---|---|---|---|---|---|---|
| | | | | 0.2% yield stength (MPa) | Tensile strength (MPa) | Absorbed energy (-60°C)(J) | CTOD(4°C) (mm) |
| Examples | T1 | W1 | F1 | 562 | 637 | 108 | 0.40 |
| | T2 | W2 | F2 | 540 | 625 | 101 | 0.32 |
| | T3 | | F3 | 542 | 629 | 95 | 0.27 |
| | T4 | W3 | F4 | 584 | 658 | 100 | 029 |
| | T5 | | F5 | 589 | 662 | 97 | 0.25 |
| Comparative Examples | T6 | W4 | F6 | 635 | 710 | 42 | 0.15 |
| | T7 | | F7 | 602 | 691 | 48 | 0.17 |
| | T8 | | F8 | 495 | 584 | 75 | 0.20 |
| | T9 | W5 | F9 | 556 | 634 | 78 | 022 |
| | T10 | | F10 | 487 | 568 | 67 | 0.20 |
| | T11 | | F11 | 573 | 666 | 56 | 0.16 |
| | T12 | W6 | F12 | 453 | 544 | 66 | 0.19 |
| | T13 | | F13 | 524 | 615 | 104 | 0.31 |
| | T14 | | F14 | 502 | 598 | 87 | 0.23 |
| | T15 | | F15 | 569 | 662 | 63 | 0.17 |
| Target value | | | | ≥500 | ≥610 | - | ≥0.25 |

TABLE 9

| | | Wire No. | Flux No. | Weldability | | | | | |
|---|---|---|---|---|---|---|---|---|---|
| | | | | Slag removability | Bead appearance | Pockmark | Seizure of bead | Diffusible hydrogen content (m/100g) | Cracking rate (%) |
| Examples | T1 | W1 | F1 | Good | Good | Good | Good | 3.0 | 3 |
| | T2 | W2 | F2 | Good | Good | Good | Good | 3.5 | 8 |
| | T3 | | F3 | Good | Good | Good | Good | 32 | 6 |
| | T4 | W3 | F4 | Good | Good | Good | Good | 28 | 2 |
| | T5 | | F5 | Good | Good | Good | Good | 26 | 1 |
| Comparative Examples | T6 | W4 | F6 | Poor | Poor | Good | Good | 3.3 | 4 |
| | T7 | | F7 | Poor | Good | Good | Good | 25 | 3 |
| | T8 | | F8 | Good | Good | Good | Good | 29 | 5 |
| | T9 | W5 | F9 | Poor | Poor | Good | Poor | 3.9 | 30 |
| | T10 | | F10 | Good | Poor | Good | Good | 3.4 | 35 |
| | T11 | | F11 | Good | Good | Good | Good | 1.9 | 26 |
| | T12 | W6 | F12 | Good | Poor | Poor | Good | 32 | 7 |
| | T13 | | F13 | Poor | Poor | Good | Good | 5.8 | 5 |
| | T14 | | F14 | Poor | Poor | Good | Good | 20 | 6 |
| | T15 | | F15 | Good | Good | Poor | Poor | 22 | 3 |

EP 2 481 515 B1

TABLE 10

| | | Chemical composition of weld metal (percent by mass) | | | | | | | | | |
|---|---|---|---|---|---|---|---|---|---|---|---|
| | | C | Si | Mn | Ni | Mo | Ti | B | O | N | Ti/O |
| Examples | T1 | 0.06 | 0.3 | 1.48 | 2.13 | trace | 0.022 | 0.0030 | 0.029 | 0.0045 | 0.76 |
| | T2 | 0.05 | 0.4 | 1.26 | 2.32 | trace | 0.028 | 0.0025 | 0.035 | 0.0047 | 0.80 |
| | T3 | 0.05 | 0.4 | 1.28 | 2.29 | trace | 0.032 | 0.0036 | 0.039 | 0.0043 | 0.82 |
| | T4 | 0.06 | 0.3 | 1.70 | 2.52 | trace | 0.018 | 0.0028 | 0.032 | 0.0052 | 0.56 |
| | T5 | 0.06 | 0.4 | 1.67 | 2.55 | tace | 0.025 | 0.0040 | 0.030 | 0.0049 | 0.83 |
| Comparative Examples | T6 | 0.06 | 0.1 | 1.76 | 1.70 | trace | 0.018 | 0.0068 | 0.033 | 0.0062 | 0.55 |
| | T7 | 0.06 | 0.3 | 1.75 | 1.68 | trace | 0.007 | 0.0031 | 0.026 | 0.0061 | 0.32 |
| | T8 | 0.05 | 0.3 | 1.76 | 1.71 | trace | 0.002 | 0.0010 | 0.040 | 0.0062 | 0.05 |
| | T9 | 0.05 | 0.4 | 0.93 | 2.25 | trace | 0.045 | 0.0033 | 0.037 | 0.0049 | 1.68 |
| | T10 | 0.05 | 0.3 | 0.96 | 2.28 | trace | 0.016 | 0.0042 | 0.031 | 0.0047 | 0.52 |
| | T11 | 0.05 | 0.6 | 0.94 | 2.26 | trace | 0.008 | 0.0032 | 0.038 | 0.0047 | 0.21 |
| | T12 | 0.04 | 0.4 | 1.40 | 2.20 | 0.10 | 0.033 | 0.0002 | 0.033 | 0.0045 | 1.00 |
| | T13 | 0.04 | 0.3 | 1.41 | 2.21 | 0.10 | 0.026 | 0.0019 | 0.047 | 0.0046 | 0.55 |
| | T14 | 0.04 | 0.3 | 1.40 | 2.19 | 0.09 | 0.036 | 0.0012 | 0.038 | 0.0045 | 0.95 |
| | T15 | 0.03 | 0.4 | 1.43 | 2.17 | 0.10 | 0.027 | 0.0038 | 0.030 | 0.0047 | 0.90 |

Table 8 indicates that Welding Tests (Examples) T1 to T5 using Solid Wires W1 to W3 and Fluxes F1 to F5 as examples of the present invention gave both a high 0.2% yield strength and a high tensile strength and gave a high absorbed energy at -60°C and a large CTOD (-40°C). In contrast to this, Welding Tests (Comparative Examples) T6 to T15 using Solid Wires W4 to W6 and Fluxes F6 to F15 as comparative examples were inferior in at least one of the 0.2% yield strength (0.2% proof stress), tensile strength, absorbed energy at -60°C, and CTOD (-40°C).

Table 9 indicates that Examples T1 to T5 according to the present invention excelled all in slag removability, bead appearance, pockmark, seizure of bead, diffusible hydrogen content, and cracking rate, each indicating weldability. In contrast, Comparative Examples T6 to T15 were inferior in at least one of these properties.

In addition, Examples T1 to T5 according to the present invention gave weld metals having chemical compositions within the ranges specified in the present invention, whereas Comparative Examples T6 to T15 gave weld metals having chemical compositions out of the ranges specified in the present invention.

FIGS. 1 and 2 are graph charts illustrating how the ratio [Ni]/([Mn]+[Mo]) of a wire and the ratio ([Total Ti]+[Total B])/[SiO$_2$] of a flux, respectively, affect the properties of the weld metal In FIG. 1, data of Solid Wires W1 to W6 as in Table 1 are plotted, and, in FIG. 2, data of Fluxes F1 to F15 as in Tables 2 and 3 are plotted. Solid Wires W1 to W6, if having a ratio [Ni]/([Mn]+[Mo]) of less than 0.9, give a weld metal having excessively high hardenability and having insufficient fracture toughness. Solid Wires W1 to W6, if having a ratio [Ni]/([Mn]+[Mo]) of more than 1.5, give a weld metal susceptible to hot cracking. Independently, Fluxes F1 to F15, if having a ratio ([Total Ti]+[Total B])/[SiO$_2$] of less than 0.05, give a weld metal having an excessively high oxygen content to cause the formation of coarse microstructures and thereby having insufficient fracture toughness. Fluxes F1 to F15, if having a ratio ([Total Ti]+[Total B])/[SiO$_2$] of more than 0.55, cause inferior weldability, such as slag removability and bead appearance, and give a weld metal having an excessively high strength and inferior fracture toughness.

**Claims**

1.　A bonded flux for submerged arc welding comprising:

MgO in a content of from 23 to 43 percent by mass;
Al$_2$O$_3$ in a content of from 11 to 31 percent by mass;
CaF$_2$ in a content of from 6 to 16 percent by mass;

$SiO_2$ in a content of from 7 to 20 percent by mass;

at least one metal carbonate in a content as $CO_2$ equivalent of from 1.0 to 8.0 percent by mass;

at least one of CaO and BaO in a total content of from 2 to 16 percent by mass;

metallic silicon (Si) in a content of from 0.4 to 1.5 percent by mass;

metallic titanium (Ti) and a titanium oxide in a total content as titanium equivalent [Total Ti] of from 1.0 to 7.0 percent by mass;

at least one of metallic boron (B) and boron oxide in a total content as boron equivalent [Total B] of from 0.01 to 0.20 percent by mass; and

at least one oxide of alkali metals sodium (Na), potassium (K), and lithium (Li) in a total content as equivalents of respective elements of from 1.0 to 6.0 percent by mass, and

the bonded flux having a ratio (Total Ti]+[Total B])l[$SiO_2$] of from 0.05 to 0.55 where [Total Ti] represents the total titanium content as titanium equivalent; [Total B] represents the total boron content as boron equivalent and [$SiO_2$] represents the $SiO_2$ content.

2. A solid wire for submerged arc welding comprising:

carbon (C) in a content of from 0.10 to 0.15 percent by mass;

manganese (Mn) in a content of from 1.5 to 2.5 percent by mass;

nickel (Ni) in a content of from 2.0 to 2.6 percent by mass;

molybdenum (Mo), if any, in a content of 0.05 percent by mass or less; and

nitrogen (N), if any, in a content of 0.008 percent by mass or less,

with the remainder being iron (Fe) and inevitable impurities, and

the solid wire having a ratio [Ni]/([Mn]+[Mo]) of from 0.9 to 1.5 where [Ni] represents the nickel content; [Mn] represents the manganese content; and [Mo] represents the molybdenum content.

3. A method for submerged anc welding of a steel for low temperature service, the method comprising the steps of preparing a bonded flux fur submerged arc welding including MgO in a content of from 23 to 43 percent by mass, $Al_2O_3$ in a content of from 11 to 31 percent by mass, $CaF_2$ in a content of from 6 to 16 percent by mass, $SiO_2$ in a content of from 7 to 20 percent by mass, at least one metal carbonate in a content as $CO_2$ equivalent of from 1.0 to 8.0 percent by mass, at least one of CaO and BaO in a total content of from 2 to 16 percent by mass, metallic silicon (Si) in a content of from 0.4 to 1.5 percent by mass, metallic titanium (Ti) and a titanium oxide in a total content as titanium equivalent [Total Ti] of from 1.0 to 7.0 percent by mass, at least one of metallic boron (B) and boron oxide in a total content as boron equivalent [Total B] of from 0.01 to 0.20 percent by mass, and at least one oxide of alkali metals sodium (Na), potassium (K), and lithium (Li) in a total content as equivalents of respective elements of from 1.0 to 6.0 percent by mass, and the bonded flux having a ratio ([Total Ti]+[Total B])/[$SiO_2$] of from 0.05 to 0.55 where [Total Ti] represents the total titanium content as titanium equivalent; [Total B] represents the total boron content as boron equivalent; and [$SiO_2$] represents the $SiO_2$ content;

preparing a solid wire for submerged arc welding including carbon (C) in a content of from 0.10 to 0.15 percent by mass, manganese (Mn) in a content of from 1.5 to 2.5 percent by mass, nickel (Ni) in a content of from 2.0 to 2.6 percent by mass, molybdenum (Mo), if any, in a content of 0.05 percent by mass or less, and nitrogen (N), if any, in a content of 0.008 percent by mass or less, with the remainder being iron (Fe) and inevitable impurities; and the solid wire having a ratio [Ni]/([Mn]+[Mo]) of from 0.9 to 1.5 where [Ni] represents the nickel content; [Mn] represents the manganese content; and [Mo] represents the molybdenum content; and

performing submerged arc welding of a steel for low temperature service using the bonded flux and the solid wire to give a weld metal comprising boron (B) in a content of from 0.0010 to 0.0050 percent by mass and titanium (Ti) in a content of from 0.010 to 0.050 percent by mass and having a ratio [Ti]/[O] of from 0.050 to 0.90 where [Ti] represents the titanium content; and [O] represents an oxygen content.

**Patentansprüche**

1. Gesintertes Schweißpulver zum Unterpulverschweißen, das Folgendes umfasst:

MgO in einer Konzentration von massenmäßig 23 bis 43 Prozent;

$Al_2O_3$ in einer Konzentration von massenmäßig 11 bis 31 Prozent;

$CaF_2$ in einer Konzentration von massenmäßig 6 bis 16 Prozent;

$SiO_2$ in einer Konzentration von massenmäßig 7 bis 20 Prozent;

mindestens ein Metallcarbonat in einer Konzentration als $CO_2$-Äquivalent von massenmäßig 1,0 bis 8,0 Prozent;

mindestens eines von CaO und BaO in einer Gesamtkonzentration von massenmäßig 2 bis 16 Prozent; metallisches Silizium (Si) in einer Konzentration von massenmäßig 0,4 bis 1,5 Prozent; metallisches Titan (Ti) und ein Titanoxid in einer Gesamtkonzentration als Titanäquivalent [TotalTi] von massenmäßig 1,0 bis 7,0 Prozent; mindestens eines von metallischem Bor (B) und Boroxid in einer Gesamtkonzentration als Boräquivalent [TotalB] von massenmäßig 0,01 bis 0,20 Prozent; und mindestens ein Oxid der Alkalimetalle Natrium (Na), Kalium (K) und Lithium (Li) in einer Gesamtkonzentration als Äquivalente der jeweiligen Elemente von massenmäßig 1,0 bis 6,0 Prozent und wobei das gesinterte Schweißpulver ein Verhältnis $([TotalTi]+[TotalB])/[SiO_2]$ von 0,05 bis 0,55 aufweist, wobei [TotalTi] für die Gesamtkonzentration von Titan als Titanäquivalent steht; [TotalB] für die Gesamtkonzentration von Bor als Boräquivalent steht; und $[SiO_2]$ für die $SiO_2$-Konzentration steht.

2. Massivdraht zum Unterpulverschweißen, das Folgendes umfasst:

Kohlenstoff (C) in einer Konzentration von massenmäßig 0,10 bis 0,15 Prozent; Mangan (Mn) in einer Konzentration von massenmäßig 1,5 bis 2,5 Prozent; Nickel (Ni) in einer Konzentration von massenmäßig 2,0 bis 2,6 Prozent; Molybdän (Mo), gegebenenfalls, in einer Konzentration von massenmäßig 0,05 Prozent oder weniger; und Stickstoff (N), gegebenenfalls, in einer Konzentration von massenmäßig 0,008 Prozent oder weniger, wobei der Rest aus Eisen (Fe) und unvermeidbaren Verunreinigen besteht und wobei der Massivdraht ein Verhältnis [Ni]/([Mn]+[Mo]) von 0,9 bis 1,5 aufweist, wobei [Ni] für die Konzentration von Nickel steht; [Mn] für die Konzentration von Mangan steht; und [Mo] für die Konzentration von Molybdän steht.

3. Verfahren zum Unterpulverschweißen eines Stahls bei niedrigen Temperaturen, wobei das Verfahren die folgenden Schritte umfasst:

das Vorbereiten eines gesinterten Schweißpulvers zum Unterpulverschweißen, das Folgendes umfasst: MgO in einer Konzentration von massenmäßig 23 bis 43 Prozent; $Al_2O_3$ in einer Konzentration von massenmäßig 11 bis 31 Prozent; $CaF_2$ in einer Konzentration von massenmäßig 6 bis 16 Prozent; $SiO_2$ in einer Konzentration von massenmäßig 7 bis 20 Prozent; mindestens ein Metallcarbonat in einer Konzentration als $CO_2$-Äquivalent von massenmäßig 1,0 bis 8,0 Prozent; mindestens eines von CaO und BaO in einer Gesamtkonzentration von massenmäßig 2 bis 16 Prozent; metallisches Silizium (Si) in einer Konzentration von massenmäßig 0,4 bis 1,5 Prozent; metallisches Titan (Ti) und ein Titanoxid in einer Gesamtkonzentration als Titanäquivalent [TotalTi] von massenmäßig 1,0 bis 7,0 Prozent; mindestens eines von metallischem Bor (B) und Boroxid in einer Gesamtkonzentration als Boräquivalent [TotalB] von massenmäßig 0,01 bis 0,20 Prozent; und mindestens ein Oxid der Alkalimetalle Natrium (Na), Kalium (K) und Lithium (Li) in einer Gesamtkonzentration als Äquivalente der jeweiligen Elemente von massenmäßig 1,0 bis 6,0 Prozent; und wobei das gesinterte Schweißpulver ein Verhältnis $([TotalTi]+[TotalB])/[SiO_2]$ von 0,05 bis 0,55 aufweist, wobei [TotalTi] für die Gesamtkonzentration von Titan als Titanäquivalent steht; [TotalB] für die Gesamtkonzentration von Bor als Boräquivalent steht; und $[SiO_2]$ für die $SiO_2$-Konzentration steht;
das Vorbereiten eines Massivdrahts zum Unterpulverschweißen, der Folgendes umfasst: Kohlenstoff (C) in einer Konzentration von massenmäßig 0,10 bis 0,15 Prozent; Mangan (Mn) in einer Konzentration von massenmäßig 1,5 bis 2,5 Prozent; Nickel (Ni) in einer Konzentration von massenmäßig 2,0 bis 2,6 Prozent; Molybdän (Mo), gegebenenfalls, in einer Konzentration von massenmäßig 0,05 Prozent oder weniger; und Stickstoff (N), gegebenenfalls, in einer Konzentration von massenmäßig 0,008 Prozent oder weniger, wobei der Rest aus Eisen (Fe) und unvermeidbaren Verunreinigen besteht; und wobei der Massivdraht ein Verhältnis [Ni]/([Mn]+[Mo]) von 0,9 bis 1,5 aufweist, wobei [Ni] für die Konzentration von Nickel steht; [Mn] für die Konzentration von Mangan steht; und [Mo] für die Konzentration von Molybdän steht; und
das Durchführen von Unterpulverschweißen eines Stahls bei niedrigen Temperaturen unter Verwendung des gesinterten Schweißpulvers und des Massivdrahts, um ein Schweißgut zu erzeugen, das Folgendes umfasst: Bor (B) in einer Konzentration von massenmäßig 0,0010 bis 0,0050 Prozent und Titan (Ti) in einer Konzentration von massenmäßig 0,010 bis 0,050 Prozent und das ein Verhältnis [Ti]/[O] von 0,050 bis 0,90 aufweist, wobei [Ti] für die Konzentration von Titan steht; und [O] für eine Konzentration von Sauerstoff steht.

**Revendications**

1. Flux aggloméré pour soudage à l'arc submergé comprenant:

MgO dans une teneur comprise entre 23 et 43 pour cent en masse;

$Al_2O_3$ dans une teneur comprise entre 11 et 31 pour cent en masse;

$CaF_2$ dans une teneur comprise entre 6 et 16 pour cent en masse;

$SiO_2$ dans une teneur comprise entre 7 et 20 pour cent en masse;

au moins un carbonate de métal dans une teneur comme équivalent $CO_2$ comprise entre 1,0 et 8,0 pour cent en masse;

au moins l'un de CaO et BaO dans une teneur totale comprise entre 2 et 16 pour cent en masse;

du silicium métallique (Si) dans une teneur comprise entre 0,4 et 1,5 pour cent en masse;

du titane métallique (Ti) et un oxyde de titane dans une teneur totale comme équivalent titane [Ti total] comprise entre 1,0 et 7,0 pour cent en masse;

au moins un du bore métallique (B) et de l'oxyde de bore dans une teneur totale comme équivalent bore [B total] comprise entre 0,01 et 0,20 pour cent en masse; et

au moins un oxyde des métaux alcalins, sodium (Na), potassium (K) et lithium (Li) dans une teneur totale comme équivalents d'éléments respectifs comprise entre 1,0 et 6,0 pour cent en masse, et

le flux aggloméré ayant un rapport ([Ti total]+[B total])/[$SiO_2$] compris entre 0,05 et 0,55 où [Ti total] représente la teneur totale en titane comme équivalent titane; [B total] représente la teneur totale en bore comme équivalent bore; et [$SiO_2$] représente la teneur en $SiO_2$.

2. Fil massif pour soudage à l'arc submergé comprenant:

du carbone (C) dans une teneur comprise entre 0,10 et 0,15 pour cent en masse;

du manganèse (Mn) dans une teneur comprise entre 1,5 et 2,5 pour cent en masse;

du nickel (Ni) dans une teneur comprise entre 2,0 et 2,6 pour cent en masse;

du molybdène (Mo), le cas échéant) dans une teneur inférieure ou égale à 0,05 pour cent en masse; et

de l'azote (N), le cas échéant, dans une teneur inférieure ou égale à 0,008 pour cent en masse,

avec le reste étant constitué de fer (Fe) et des inévitables impuretés, et

le fil massif ayant un rapport [Ni]/([Mn]+[Mo]) compris entre 0,9 et 1,5, où [Ni] représente la teneur en nickel ; [Mn] représente la teneur en manganèse; et [Mo] représente la teneur en molybdène.

3. Procédé de soudage à l'arc submergé d'un acier pour exploitation à basse température, le procédé comprenant les phases consistant à préparer un flux aggloméré pour soudage à l'arc submergé à inclure MgO dans une teneur comprise entre 23 et 43 pour cent en masse, $Al_2O_3$ dans une teneur comprise entre 11 et 31 pour cent en masse, $CaF_2$ dans une teneur comprise entre 6 et 16 pour cent en masse, $SiO_2$ dans une teneur comprise entre 7 et 20 pour cent en masse, au moins un carbonate de métal dans une teneur comme équivalent $CO_2$ comprise entre 1,0 et 8,0 pour cent en masse, au moins l'un de CaO et BaO dans une teneur totale comprise entre 2 et 16 pour cent en masse, du silicium métallique (Si) dans une teneur comprise entre 0,4 et 1,5 pour cent en masse, du titane métallique (Ti) et un oxyde de titane dans une teneur totale comme équivalent titane [Ti total] comprise entre 1,0 et 7,0 pour cent en masse, au moins un du bore métallique (B) et de l'oxyde de bore dans une teneur totale comme équivalent bore [B total] comprise entre 0,01 et 0,20 pour cent en masse, au moins un oxyde des métaux alcalins, sodium (Na), potassium (K) et lithium (La) dans une teneur totale comme équivalents d'éléments respectifs comprise entre 1,0 et 6,0 pour cent en masse, et le flux aggloméré ayant un rapport ([Ti total]+[B total])/[$SiO_2$] compris entre 0,05 et 0,55 où [Ti total] représente la teneur totale en titane comme équivalent titane ; [B total] représente la teneur totale en bore comme équivalent bore; et [$SiO_2$] représente la teneur en $SiO_2$;

préparer un fil massif pour soudage à l'arc submergé incluant du carbone (C) dans une teneur comprise entre 0,10 et 0,15 pour cent en masse, du manganèse (Mn) dans une teneur comprise entre 1,5 et 2,5 pour cent en masse, du nickel (Ni) dans une teneur comprise entre 2,0 et 2,6 pour cent en masse, du molybdène (Mo), le cas échéant, dans une teneur inférieure ou égale à 0,05 pour cent en masse, et de l'azote (N), le cas échéant, dans une teneur inférieure ou égale à 0,008 pour cent en masse, avec le reste étant constitué de fer (Fe) et des inévitables impuretés; et le fil massif ayant un rapport [Ni]/([Mn]+[Mo]) compris entre 0,9 et 1,5, où [Ni] représente la teneur en nickel; [Mn] représente la teneur en manganèse; et [Mo] représente la teneur en molybdène; et

réaliser le soudage à l'arc submergé d'un acier pour exploitation à basse température à l'aide du flux aggloméré et du fil massif pour obtenir un métal de soudure contenant du bore (B) dans une teneur comprise entre 0,0010 et 0,0050 pour cent en masse et du titane (Ti) dans une teneur comprise entre 0,010 et 0,050 pour cent en masse et ayant un rapport [Ti]/[O] compris entre 0,050 et 0,90 où [Ti] représente la teneur en titane; et [O] représente une teneur en oxygène.

# FIG.1

# FIG.2

**EP 2 481 515 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07256489 A

- JP H10113791 A